# FASCICULE DE BREVET EUROPEEN

(11) **EP 2 785 648 B1**
(45) Date de publication et mention de la délivrance du brevet: **14.09.2016**
(21) Numéro de dépôt: 12791506.4
(22) Date de dépôt: 29.11.2012
(51) Int. Cl.: C02F 1/32, C02F 1/78, A61L 2/00, C02F 103/42

(54) **DISPOSITIF ET PROCEDE DE TRAITEMENT D'EAU**
VORRICHTUNG UND VERFAHREN ZUR BEHANDLUNG VON WASSER
DEVICE AND METHOD FOR TREATING WATER

(30) Priorité: 29.11.2011 CH 18992011
(43) Date de publication de la demande: 08.10.2014
(73) Titulaire: Avi Swiss Group SA, 2012 Auvernier (CH)
(72) Inventeur: PAYAGE, John, CH-2023 Gorgier (CH)
(74) Mandataire: P&TS SA (AG, Ltd.)
(86) Numéro de dépôt international: PCT/EP2012/073989
(87) Numéro de publication internationale: WO 2013/079608

(56) Documents cités:
- EP-A1- 2 165 978
- WO-A1-93/06871
- WO-A2-98/20910
- JP-A- 2002 086 168
- US-A- 5 288 461
- US-A- 5 512 178
- US-A1- 2008 290 045

## Description

### Domaine technique

La présente invention concerne un dispositif et un procédé de traitement d'eau. La présente invention concerne en particulier un dispositif et un procédé de traitement d'eau pour une piscine et ou un jacuzzi.

### Etat de la technique

US6824695décrit un procédé de traitement de l'eau au moyen d'un ozonateur puis d'une lampe à ultraviolets servant aussi à la destruction de l'ozone résiduel.

GB2306463 décrit un système de décontamination d'eau pour piscines, qui comprend une chambre de contact eau-ozone suivi par un destructeur d'ozone par ultraviolet.

DE102004027574 décrit différents schémas de traitement de l'eau avec injection d'ozone puis traitement par ultraviolets à la fois pour stériliser et détruire l'ozone.

US20110247972 décrit un système de traitement de l'eau par ozone et ultraviolets.

DE10040566 décrit un procédé de traitement de l'eau au moyen d'une lampe à ultraviolets produisant également de l'ozone utilisé pour le traitement.

US4959142 décrit un dispositif de stérilisation d'eau pour piscine à l'aide d'une application d'ozone puis d'ultraviolets (UVs). Un système est déclenché automatiquement en cas de bris des portions transparentes du tube, afin d'éviter les inondations en court-circuitant le filtre à ultraviolets. L'eau à la sorte du filtre à ultraviolets ou du court-circuit passe par un filtre qui détruit la plus grande partie de l'ozone résiduel avant de rejoindre un bassin.

EP2289854 décrit un procédé de traitement de l'eau au moyen d'une lampe à ultraviolets produisant également de l'ozone utilisé pour le traitement. Un circuit de bypass permet d'éviter le passage de l'eau à travers un venturi, afin de régler la quantité d'ozone dans l'eau traitée qui rejoint la piscine.

DE10022093 décrit un procédé de traitement de l'eau au moyen d'ozone. La quantité d'ozone peut être variée au moyen de valves réglant le passage passant à travers des court-circuits, de manière à varier la quantité d'ozone entre le jour et la nuit.

US8025807 décrit un système de traitement d'eau par ozone, comprenant un destructeur d'ozone, un filtre à particule et un système de traitement chimique. Ce dispositif nécessite donc un traitement avec des produits chimiques.

DE3830999décrit un système de traitement de l'eau par ozone, avec injection d'ozone dans un bassin tampon dans le circuit de circulation d'eau.

WO9820910 décrit un système de traitement d'eaux usées par exposition à un champ magnétique, à l'ozone et aux ultraviolets. Plusieurs cycles de traitement peuvent être prévus.

US5288461 décrit un dispositif de traitement d'eau au moyen de rayonnement ultraviolet dans deux longueurs d'ondes.

US20080290045 concerne un procédé de décontamination à l'aide de rayons ultraviolets et d'ozone.

US5512178 concerne un procédé et un dispositif de traitement d'eau impliquant l'utilisation d'ozone et de rayons ultraviolets.

EP2165978 concerne également un procédé et un dispositif de traitement d'eau impliquant l'utilisation d'ozone et de rayons ultraviolets.

WO9306871 concerne un appareil de stérilisation d'eau pourvu d'une chambre d'ozone et d'une chambre à rayonnement ultraviolet.

JP2002086168 concerne également un dispositif et un procédé de traitement d'eau impliquant l'utilisation d'ozone et de rayons ultraviolets.

Ces différents documents de l'art antérieur montrent qu'il est connu de traiter l'eau au moyen d'ultraviolets et/ou d'ozone afin de réduire le nombre de bactéries. Il est également connu d'utiliser une lampe à ultraviolets afin de réduire le taux d'ozone résiduel dans l'eau après son traitement, et éviter ainsi les désagréments occasionnés par un taux d'ozone dissous élevé dans l'eau.

Dans le cas particulier du traitement de l'eau d'une piscine ou d'un bassin, les documents cités permettent uniquement de traiter l'eau réinjectée dans le bassin, mais pas l'eau qui stagne dans le bassin lui-même. Un traitement chimique complémentaire, par exemple à l'aide de chlore, est nécessaire afin de traiter l'eau stagnante et d'éviter notamment le dépôt d'algues qui peuvent se développer dans les eaux stagnantes contre les parois et les échelles du bassin par exemple. Les procédés existants permettent de réduire la quantité de chlore ou de produits chimiques dans le bassin, mais pas de les supprimer complètement, parce qu'il est difficile de recycler la totalité de l'eau à travers le dispositif; des eaux stagnantes non traitées subsistent dans la plupart des bassins

### Bref résumé de l'invention

Un but de la présente invention est de proposer un dispositif et un procédé de traitement de l'eau par ozone et/ou ultraviolets qui permet de supprimer la nécessité d'un traitement chimique additionnel.

L'invention part notamment de la constatation que le traitement à l'ozone est efficace, mais seulement si la quantité d'ozone dissoute dans l'eau du bassin est suffisante. La quantité nécessaire est cependant supérieure au seuil à partir duquel des désagréments sont ressentis ou subis par des personnes qui se tiennent au bord du bassin.

L'invention part aussi de la constatation que l'ozone se dégrade rapidement, et qu'une concentration élevée dans l'eau d'un bassin a tendance à naturellement descendre en quelques dizaines de minutes en-dessous du seuil à parti duquel des désagréments sont subis.

L'invention part encore de la constatation que la plupart des piscines et des bassins sont utilisés pendant un nombre d'heures limité chaque semaine, et que des taux d'ozones dissous élevés pendant les heure au cours desquels le bassin n'est pas utilisé sont peu ou pas problématiques.

Partant de ces constations, l'invention propose un dispositif selon la revendication 1 et un procédé selon la revendication 9.

Ce dispositif permet donc d'injecter de l'ozone soit en amont, soit en aval du dispositif de destruction d'ozones par ultraviolets, au choix de l'utilisateur. Une injection en amont du dispositif de destruction d'ozone permet de traiter l'eau qui traverse le dispositif de traitement de manière efficace, en évitant pratiquement tout rejet d'ozone dissous dans l'eau libérée dans le bassin après son traitement par ozone et UVs.

Une injection d'ozone en aval du dispositif de destruction d'ozone permet de traiter l'eau qui traverse le dispositif de traitement de manière efficace, tout en s'assurant un rejet important d'ozone dissous dans l'eau libérée dans le bassin après son traitement par ozone et UVs.

Ainsi, l'eau qui entre dans le bassin via la conduite de sortie du dispositif est riche en ozone, ce qui permet d'effectuer un traitement dans le bassin lui-même, et de supprimer ainsi efficacement les algues et les bactéries dans le bassin.

Les expressions « amont » et « aval » par rapport à un dispositif doivent être comprises par rapport au sens d'écoulement du flux d'eau à traiter dans le dispositif. Par exemple, on qualifiera de point d'injection en amont du destructeur n'importe quel point d'injection placé de manière telle que l'ozone injecté rejoigne le flux d'eau à traiter avant que ce flux ne traverse le destructeur. Un point d'injection en aval du destructeur désigne n'importe quel point d'injection tel que l'ozone injecté rejoigne le flux d'eau qui a déjà quitté la sortie du destructeur. Il n'est pas nécessaire que le point d'injection en amont ou en aval d'un dispositif soit traversé par le courant principal traversant ce dispositif; un point d'injection peut aussi se trouver sur un affluent du courant principal.

Les expressions « pauvre en ozone » et « riche en ozone » sont relatives l'une à l'autre. Le dispositif permet soit de produire en sortie une eau avec un premier taux d'ozone (eau dite pauvre en ozone), soit une eau avec un deuxième taux d'ozone supérieur au premier taux (eau dite riche en ozone). En pratique, l'eau pauvre en ozone est propice à la baignade et à la consommation, tandis que le taux d'ozone dans l'eau riche en ozone est suffisant pour assurer un traitement bactériologique significatif.

Dans un mode de réalisation préférentiel, le dispositif de traitement d'eau de l'invention ne comporte aucun dispositif ou moyen de traitement chimique, mis à part l'ozone.

Dans un mode de réalisation préférentiel, le dispositif de traitement d'eau de l'invention ne comporte aucun dispositif de filtration.

Dans un mode de réalisation préférentiel, le dispositif de traitement d'eau de l'invention effectue un traitement de l'eau uniquement au moyen d'ozone et d'ultraviolets, à l'exclusion de tous autres moyens de traitement additionnels.

Le dispositif de l'invention permet à l'utilisateur de choisir s'il souhaite un traitement de l'eau par ozone qui détruise l'ozone dissous, par exemple pendant les heures d'utilisation d'une piscine, ou s'il préfère que cet ozone dissous entre dans le bassin, par exemple afin d'appliquer un traitement choc de l'ensemble de l'eau dans le bassin lorsque ce dernier n'est pas utilisé.

### Brève description des figures

Des exemples de mise en oeuvre de l'invention sont indiqués dans la description illustrée par les figures annexées dans lesquelles :

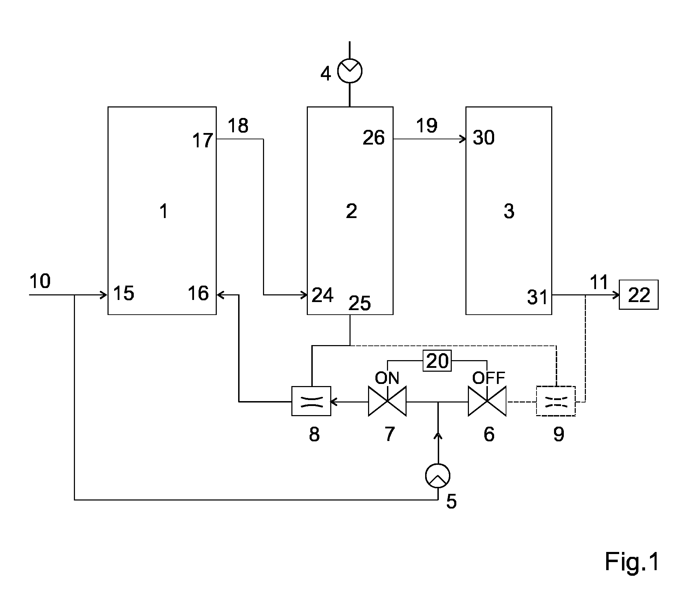

La figure 1 illustre une vue schématique du dispositif de traitement d'eau selon l'invention, les vannes étant commandées de manière à provoquer une injection d'ozone en amont d'un destructeur d'ozone.
La figure 2 illustre une vue schématique du dispositif de la figure 1, mais dans lequel les vannes sont commandées de manière à provoquer une injection d'ozone en aval d'un destructeur d'ozone.

### Exemple(s) de mode de réalisation de l'invention

Le dispositif illustré de façon schématique sur les figures comporte une chambre de contact 1, un générateur d'ozone 2 et un destructeur d'ozone 3. Chacun de ces éléments peut avantageusement être réalisé sous la forme d'une cuve verticale en inox de section cylindrique. L'eau à traiter est injectée par une entrée d'eau 10 dans la chambre de contact 1 où elle subit un traitement à l'ozone, traverse ensuite le générateur d'ozone 2 où elle est exposée aux ultraviolets du générateur d'ozone, puis le destructeur d'ozone 3où elle est soumise à un second traitements aux ultraviolets du destructeur d'ozone, avant de quitter le dispositif par une conduite de sortie 11 directement reliée à un bassin 22, par exemple une piscine, un spa, un jacuzzi, un réservoir d'eau potable, un point de consommation d'eau, un robinet, etc. Il est aussi possible d'utiliser ce dispositif pour traiter les conduites d'eau d'une habitation soit en mode continu, ou en mode ozone choc en laissant les robinets ouverts pendant quelques minutes.

La chambre de contact 1 permet de mettre l'eau à traiter en contact avec l'ozone, pendant une durée aussi longue que possible. L'eau à traiter pénètre par une admission 15 au bas de la chambre de contact 1 tandis que l'ozone dissous dans un jet d'eau sous pression pénètre par une autre admission 16 au bas de la chambre de contact 1. Les deux flux d'eau se mélangent dans la chambre de contact de manière à assurer une répartition homogène de l'ozone dissous dans l'eau, et remontent vers le haut du récipient, en passant éventuellement entre des chicanes pour prolonger le temps de contact, avant de quitter la chambre de contact par une sortie 17 liée à une conduite 18 qui injecte l'eau ainsi traitée par l'ozone dans une admission 24 au bas du générateur d'ozone 2.

Le générateur d'ozone 2 comporte une ou plusieurs lampes à ultraviolets dans un tube transparent traversé par un flux d'air généré par la pompe à air 4. Il est aussi possible de renoncer à la pompe à air 4 et d'injecter de l'air à pression atmosphérique dans le générateur d'ozone 2 ; toutefois dans ce cas le taux d'ozone produit et qui peut être dissousdans l'eau sera plus faible. La longueur d'onde des lampes à ultraviolets est de préférence comprise dans une gamme autour de 185 nm afin convertir une portion substantielle de l'oxygène dans ce flux d'air en ozone qui quitte le générateur d'ozone par une sortie d'ozone 25. L'eau admise par l'admission 24 circule autour de ce ou ces tubes transparents, en sorte que la lumière ultraviolette produite par les lampes à ultraviolets traverse aussi l'eau dans le générateur d'ozone 2. L'eau ainsi traitée aux ultraviolets quitte le générateur d'ozone 2 par une sortie d'eau 26 reliée à une conduite 19 qui injecte l'eau ainsi traitée dans le destructeur d'ozone 3 via une admission 30.

Le destructeur d'ozone 3 comporte une ou plusieurs lampes à ultraviolets qui émettent dans une longueur d'onde autour de 254 nm, la lumière ultraviolette ainsi produite traversant l'eau à travers le destructeur d'ozone de manière à décomposer l'ozone encore dissous dans cette eau en oxygène. De cette manière, l'eau qui quitte le destructeur d'ozone 3 par une sortie d'eau 31 et la conduite 11 pénètre dans le bassin 22 avec un taux résiduel dissous qui est proche de nul lors de l'usage normal.

En usage normal, l'ozone sous forme gazeux produit par le générateur d'ozone 2 à la sortie 25est injectée au point d'injection 8, par exemple un injecteur à venturi, dans un flux d'eau créé par la pompe à eau 5 via l'électrovanne 7 en position ouverte (ON). L'eau sous pression avec de l'ozone dissous est injectée dans la chambre de contact 1 via l'admission 16. La seconde électrovanne 6 est fermée (OFF) lors de cette utilisation normale, en sorte que le flux d'eau ozonée au second point d'injection 9 est nul.

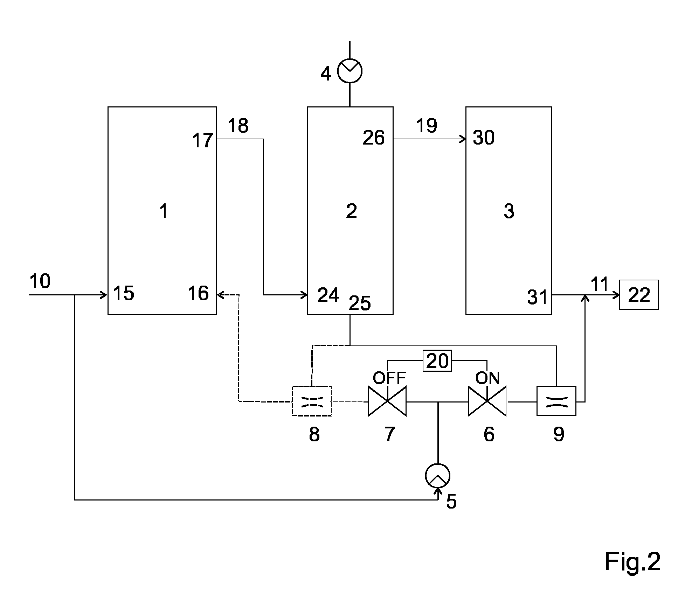

Afin de créer un choc d'ozone, c'est-à-dire d'augmenter temporairement de manière extrêmement importante la quantité d'ozone dissoute dans l'eau à la conduite de sortie 11 et injectée dans le bassin 22, le système comporte un dispositif de commande 20 qui permet de commuter, au moins temporairement, la première électrovanne 7 en position fermée (OFF) et la deuxième électrovanne 6 en position ouverte (ON), comme illustré sur la figure 2. Dans cette configuration, l'eau à la sortie de la pompe 5 est injectée via l'électrovanne 6 dans le deuxième injecteur d'ozone 9 (par exemple un venturi) afin de mélanger à l'eau de sortie dans la conduite une eau à très forte concentration d'ozone dissous et de provoquer ainsi un choc d'ozone dans le bassin 22, c'est-à-dire une concentration d'ozone momentanément très élevée qui permettra de réduire la pression bactériologique dans tous le bassin 22. La quantité d'ozone est ainsi momentanément très importante dans le bassin 22, ce qui permet de supprimer les bactéries et les algues dans les eaux stagnantes contre les bords ou les échelles métalliques du bassin par exemple. La quantité d'ozone étant alors importante, cette opération est de préférence commandée manuellement ou par un minuteur de manière à être effectuée de préférence lorsque le bassin 22 n'est pas utilisé, par exemple la nuit.

Dans une variante non illustrée, les deux électrovannes 6 et 7 peuvent être ouvertes en même temps afin d'injecter de l'ozone simultanément dans la chambre de contact 1 et en aval du destructeur d'ozone. Une partie de l'ozone produit par le générateur 2 étant alors détruite dans le destructeur d'ozone 3, le choc d'ozone sera cependant moins important que si l'ozone est introduit uniquement au second point d'injection 9.

Le dispositif de commande 20 comporte de préférence un tableau de commande qui permet à un utilisateur de choisir facilement le mode ozone choc, par exemple en pressant sur un seul bouton ou actuateur clairement signalé. Une alarme auditive et/ou visuelle peut être émise afin de prévenir les utilisateurs de ne pas utiliser le bassin 22 et de ne pas séjourner trop longtemps à proximité de ce bassin durant le traitement, pour éviter les risques de désagréments dus à l'ozone. Le bouton de passage au mode ozone choc peut être protégé par une clé. Il permet d'agir à la fois sur la vanne 6 et sur la vanne 7, pour commander ces deux vannes par une seule manipulation. Une minuterie permet de limiter automatiquement la durée de traitement à l'ozone, et de retourner automatiquement au mode normal avec injection d'ozone au point 8 en amont du destructeur d'ozone 3 après une durée prédéterminée.

L'eau à la conduite de sortie 11 du dispositif pénètre directement dans le bassin sans traverser de filtre, de bac de sable ou d'autres éléments susceptibles de détruire l'ozone injecté au point 9. Il est aussi possible de raccorder un tuyau à ce point, afin de laver une pièce, les abords d'une piscine etc avec une solution d'eau à haute teneur en ozone dissous.

Le dispositif de l'invention peut comporter d'autres éléments, par exemple un bac à sable en amont du second point d'injection 9.

## Revendications

1. Un dispositif de traitement d'eau, comprenant :
une conduite (11) de sortie d'eau traitée, destinée à alimenter une piscine ou un jacuzzi (22) en aval de ladite conduite ;
un générateur d'ozone (2), agencé pour générer de l'ozone et pour l'injecter dans un flux d'eau en un premier point d'injection (8) ;
un destructeur d'ozone par ultraviolets (3), agencé pour réduire le taux d'ozone dans l'eau après son traitement avec l'ozone injectée au premier point d'injection (8);
**caractérisé par** :
un second point d'injection d'ozone (9) permettant d'injecter de l'ozone dans un flux d'eau qui atteint ladite conduite de sortie (11) et la piscine ou le jacuzzi sans traverser le destructeur d'ozone (3) ;
une pompe à eau (5) pour pomper de l'eau dans une conduite (50) ;
une première électrovanne (7) pour injecter l'eau de ladite conduite (50) vers ledit premier point d'injection (8) ;
une deuxième électrovanne (6) pour injecter l'eau de ladite conduite (50) vers ledit second point d'injection (9) ;
un dispositif de commande (20) permettant de commander :
- une injection d'ozone au premier point d'injection (8), permettant de produire dans ladite conduite de sortie (11) une eau traitée avec un premier taux en ozone, cette eau étant dite pauvre en ozone,
- ou une injection d'ozone au second point d'injection (9);
le dispositif de commande permettant de commuter, au moins temporairement, la première électrovanne (7) en position fermée et la deuxième électrovanne (6) en position ouverte, de manière à produire dans ladite conduite de sortie (11) et dans la piscine ou le jacuzzi (22) en aval de ladite conduite une eau avec un deuxième taux en ozone supérieur au premier taux, cette eau étant dite riche en ozone,
le dispositif comprenant une minuterie qui commande la fermeture de la deuxième électrovanne (8) et l'ouverture de la première électrovanne (7), permettant un retour automatique à une injection d'ozone au premier point après une durée prédéterminée; ou un bouton permettant en une seule manipulation la fermeture de la deuxième électrovanne (8) et l'ouverture de la première électrovanne (7).

2. Le dispositif de la revendication 1, dans lequel :
ledit destructeur d'ozone par ultraviolets (2) comprend une source d'ultraviolets agencée pour générer des ultraviolets essentiellement dans la bande de longueur d'ondes autour de 254 nm afin de permettre à la fois un traitement bactériologique de l'eau et une réduction du taux d'ozone dans l'eau.

3. Le dispositif de l'une des revendications 1 ou 2, comprenant en outre :
un bassin de baignade (22) directement en aval de ladite conduite de sortie (11) sans que l'eau quittant le second point d'injection ne traverse de filtre avant d'atteindre ledit bassin de baignade.

4. Le dispositif de l'une des revendications 1 à 3, comportant :
une première chambre de contact (1) pour mettre l'eau à traiter avec l'ozone produit par ledit générateur d'ozone (2) ;
une chambre de traitement (3) constituant ledit destructeur d'ozone par ultraviolets et comportant au moins une lampe à ultraviolets agissant sur l'eau à traiter pour à la fois réduire le nombre de germes dans ladite eau et neutraliser l'ozone dissous dans ladite eau ;
au moins une vanne (6, 7) commandable par ledit utilisateur pour injecter l'ozone produit par ledit générateur d'ozone (2) soit dans ledit premier point d'injection (8) dans ladite première chambre de contact, et/ou dans ledit second point d'injection (9).

5. Le dispositif de la revendication 4, au moins une dite vanne (6, 7) étant une électrovanne commandée par ledit dispositif de commande.

6. Le dispositif de l'une des revendications 1 à 5, comportant une pompe à air (4) pour injecter de l'air sous pression dans ledit générateur d'ozone (2).

7. Le dispositif de l'une des revendications 1 à 6, dans lequel ledit générateur d'ozone comporte au moins une lampe à ultraviolets émettant dans une gamme de longueur d'ondes autour de 185nm, un tuyau d'air exposé aux ultraviolets émis par ladite lampe à ultraviolets afin de produire de l'ozone, et un tuyau d'eau exposé aux ultraviolets émis par ladite lampe à ultraviolets afin de réduire le taux de bactéries dans l'eau.

8. Le dispositif de l'une des revendications 1 à 7, dans lequel ledit générateur d'ozone comporte au moins une lampe à ultraviolets émettant dans une gamme de longueur d'ondes autour de 185nm, un tuyau d'air exposé aux ultraviolets émis par ladite lampe à ultraviolets afin de produire de l'ozone, et un tuyau d'eau exposé aux ultraviolets émis par ladite lampe à ultraviolets afin de réduire le taux de bactéries dans l'eau.

9. Un procédé de traitement d'eau, comprenant :
i) génération d'ozone (2) ;
ii) ouverture d'une première électrovanne (7) commandée par un dispositif de commande pour injecter ledit ozone dans l'eau à traiter en un premier point d'injection (8) ;
iii) destruction de l'ozone après traitement au moyen d'un destructeur d'ozone par ultraviolets (3),
iv) injection d'eau traitée dans une conduite de sortie (11) puis dans une piscine ou un jacuzzi (22) en aval de ladite conduite de sortie (11);
v) fermeture de la première électrovanne (7) actionnée par ledit dispositif de commande de manière à stopper l'injection d'ozone audit premier point d'injection (8) ;
vi) ouverture d'une deuxième électrovanne (6) commandée par ledit dispositif de commande pour injecter l'ozone généré par ledit générateur d'ozone dans ladite conduite de sortie (11) sans la faire passer par ledit destructeur d'ozone (3), de manière à augmenter temporairement le taux d'ozone dissous dans ladite conduite de sortie (11) et dans la piscine ou le jacuzzi (22) ;
vii) fermeture de la deuxième électrovanne (8) et ouverture de la première électrovanne (7), l'ouverture et la fermeture étant commandées soit par une minuterie permettant un retour automatique à une injection d'ozone au premier point après une durée prédéterminée; soit par un bouton permettant en une seule manipulation la fermeture de la deuxième électrovanne (8) et l'ouverture de la première électrovanne (7).

## Patentansprüche

1. Wasserbehandlungsvorrichtung, aufweisend:
eine Auslassleitung (11) für behandeltes Wasser, ausgebildet ein Schwimmbad oder ein Jacuzzi (22) stromabwärts von der Auslassleitung (11) zu versorgen;
ein Ozongenerator (2) ausgebildet um Ozon zu generieren und um dieses in einen Wasserfluss an einem ersten Zugabepunkts (8) zuzugeben;
einen Ozonzerstörer (3), der ultraviolette Strahlung verwendet, die ausgebildet ist, um den Ozongehalt in dem Wasser nach der Behandlung mit dem an dem ersten Zugabepunkt (8) zugegebenen Ozon zu reduzieren;
**gekennzeichnet durch**:
einen zweiten Ozonzugabepunkt (9), der erlaubt das Ozon in den Wasserfluss, der die Auslassleitung (11) und das Schwimmbad oder die Jacuzzi erreicht, zuzugeben ohne dass der Wasserfluss **durch** den Ozonzerstörer passiert,
eine Wasserpumpe (5) um Wasser in ein Leitung (50) zu pumpen;
ein erstes Elektromagnetventil (7) um das Wasser von der Leitung (50) zu dem ersten Zugabepunkt (8) zu pumpen;
ein zweites Elektromagnetventil (6) um das Wasser von dem Rohr (50) zu dem zweiten Zugabepunkt zu pumpen;
ein Steuergerät (20) zum Steuern:
- der Zugabe des Ozons an dem ersten Zugabepunkt, wobei **dadurch** behandeltes Wasser mit einem zu produzierenden ersten Ozongehalt an der Auslassleitung (11) ermöglicht wird;
- oder das Zugeben von Ozon an dem zweiten Zugabepunkt (9);
wobei das Steuergerät es erlaubt zumindest zeitweise das erste Elektromagnetventil (7) in eine geschlossene Position und das zweite Elektromagnetventil (6) in eine offene Position umzuschalten, um so in der Auslassleitung (11) und in dem Schwimmbad oder dem Jacuzzi (22) stromabwärts der Leitung Wasser mit einem zweiten Ozongehalt grösser als der erste Gehalt zu produzieren, wobei dieses Wasser ozonreich genannt wird,
wobei das Gerät einen Timer, der das Schliessen des zweiten Elektromagnetventils (8) und das Öffnen des ersten Elektromagnetventils (7) steuert, um eine automatische Rückkehr zu einer Zugabe des Ozons an dem ersten Punkt nach einer vorbestimmten Zeitdauer zu erlauben, oder einen Schalter, der in einer einzigen Manipulation das Schliessen des zweiten Elektromagnetventils (8) und das Öffnen des ersten Elektromagnetventils (7) erlaubt, aufweist.

2. Vorrichtung nach Anspruch 1, wobei:
der ultraviolette Strahlen verwendende Ozonzerstörer (2) eine Quelle der ultravioletten Strahlen aufweist, die ausgebildet ist, um ultraviolette Strahlen grundsätzlich in dem Wellenlängenband um 254nm zu erzeugen, und sowohl eine bakterielle Behandlung des Wassers als auch eine Reduktion des Ozongehalts des Wassers zu erlauben.

3. Vorrichtung nach einem der Ansprüche 1 oder 2, weiter aufweisend:
ein Badebecken (22) direkt stromabwärts der Auslassleitung (11), wobei das Wasser, das den zweiten Zugabepunkt verlässt, nicht durch den Filter vor läuft, bevor es das Badebecken erreicht.

4. Vorrichtung nach einem der Ansprüche 1 bis 3, aufweisend:
eine erste Kontaktkammer (1), um das zu behandelnde Wasser mit dem von dem Ozongenerator (2) erzeugten Ozon zu mischen;
eine Behandlungskammer (3), die den ultraviolette Strahlen verwendenden Ozonzerstörer ausbildet und mindestens eine ultraviolette Lampe aufweist, die auf das zu behandelnde Wasser wirkt, um sowohl die Anzahl der Bakterien zu minimieren und das in dem Wasser befindliche Ozon zu neutralisieren;
wenigstens ein Ventil (6, 7) das von dem Benutzer kontrolliert werden kann, um das von dem Ozongenerator (2) produzierte Ozon entweder an dem erste Zugabepunkt in der Kontaktkammer und/oder an dem zweiten Zugabepunkt (9) zuzugeben.

5. Vorrichtung nach Anspruch 4, wobei das mindestens eine Ventil (6, 7) ein Elektromagnetventil ist, das von dem Steuergerät gesteuert wird.

6. Vorrichtung nach einem der Ansprüche 1 bis 5, aufweisend eine Luftpumpe (4) für das Zugeben von Luft unter Druck in dem Ozongenerator (2).

7. Vorrichtung nach einem der Ansprüche 1 bis 6, wobei der Ozongenerator mindestens eine ultraviolette Lampe, die in dem Wellenlängenbereich um 185nm emittiert, einen Luftschlauch, der den von der ultravioletten Lampe emittierten ultravioletten Strahlen ausgesetzt ist, um Ozon zu produzieren, und einen Wasserschlauch, der den von der ultravioletten Lampe emittierten ultravioletten Strahlen ausgesetzt ist, um das Niveau der Bakterien in dem Wasser zu reduzieren.

8. Vorrichtung nach einem der Ansprüche 1 bis 7, wobei der Ozongenerator mindestens eine ultraviolette Lampe, die in dem Wellenlängenbereich um 185nm emittiert, einen Luftschlauch, der den von der ultravioletten Lampe emittierten ultravioletten Strahlen ausgesetzt ist, um Ozon zu produzieren, und einen Wasserschlauch, der den von der ultravioletten Lampe emittierten ultravioletten Strahlen ausgesetzt ist, um das Niveau der Bakterien in dem Wasser zu reduzieren.

9. Verfahren zu Behandlung von Wasser, aufweisend:
i) Erzeugung von Ozon (2);
ii) Öffnen eines ersten Elektromagnetventils (7), das von einer Steuervorrichtung gesteuert wird, um Ozon in das zu behandelnde Wasser an einem ersten Zugabepunkts (8) zuzugeben;
iii) Zerstören von Ozon nach der Behandlung mittels eines Ozonzerstörers (3) unter Verwendung ultravioletter Strahlen,
iv) Einleiten des behandelten Wassers in eine Auslassleitung (11) und dann in ein Schwimmbad oder ein Jacuzzi (22) stromabwärts der Auslassleitung (11);
v) Schliessen des ersten Elektromagnetventils (7) aktiviert durch die Steuervorrichtung, um so die Zugabe von Ozon an dem ersten Zugabepunkt (8) zu stoppen;
vi) Öffnen eines zweiten Elektromagnetventils (6), das durch die Steuervorrichtung gesteuert wird, um das durch den Ozongenerator erzeugte Ozon in die Auslassleitung (11) zuzugeben ohne es an dem Ozonzerstörer (3) passieren zu lassen, um so den Ozongehalt in der Auslassleitung (11) und in dem Schwimmbad oder Jacuzzi (22) zeitweise zu erhöhen;
vii) Schliessen des zweiten Elektromagnetventils (8) und öffnen des ersten Elektromagnetventils (7), wobei das Öffnen und Schliessen entweder von einem Timer, der eine automatische Rückkehr zu einer Zugabe des Ozons an dem ersten Punkt nach einer vorbestimmten Zeitdauer erlaubt, oder von einen Schalter, der in einer einzigen Manipulation das Schliessen des zweiten Elektromagnetventils (8) und das Öffnen des ersten Elektromagnetventils (7) erlaubt, gesteuert wird.

## Claims

1. Water treatment device, including:
an outlet pipe (11) for treated water, designed for feeding a swimming pool or a Jacuzzi (22) downstream of said pipe;
an ozone generator (2) arranged for generating ozone and for feeding same into a water flow at a first feeding point (8);
an ozone destroyer (3) using ultraviolet rays, which is arranged for reducing the ozone content in the water after its treatment with the ozone fed at the first feeding point (8);
**characterized by**:
a second ozone feeding point (9) enabling ozone to be fed into a water flow that reaches said outlet pipe (11) and the swimming pool or Jacuzzi without passing through the ozone destroyer (3);
a water pump (5) for pumping water in a pipe (50);
a first electric valve (7) for feeding the water from said pipe (50) towards said first feeding point (8);
a second electric valve (6) for feeding the water from said pipe (50) towards said second feeding point (9);
a control device (20) for controlling:
- the feeding of ozone at the first feeding point (8), thereby enabling treated water with a first ozone content to be produced in said outlet pipe (11), wherein this water is called ozone-poor;
- or the feeding of ozone at the second feeding point (9);
wherein the control device makes it possible to switch, at least temporarily, the first electric valve (7) in closed position and the second electric valve (6) in open position so as to produce in said outlet pipe (11) and in the swimming pool or the Jacuzzi (22) downstream of said pipe water with a second ozone content greater than the first content, this water being called ozone-rich,
wherein the device comprises a timer that controls the closing of the second electric valve (8) and the opening of the first electric valve (7), allowing an automatic return to a feeding of ozone at the first point after a predetermined duration, or a button allowing in a single manipulation the closing of the second electric valve (8) and the opening of the first electric valve (7).

2. Device according to claim 1, wherein:
said ozone destroyer (2) using ultraviolet rays comprises a source of ultraviolet rays arranged for generating ultraviolet rays essentially in the wavelength band around 254nm in order to allow both a bacteriological treatment of the water and a reduction of the ozone content in the water.

3. Device according to one of the claims 1 or 2, further comprising:
a bathing pool (22) directly downstream of said outlet pipe (11) wherein the water leaving the second feeding point does not go through the filter before reaching said bathing pool.

4. Device according to one of the claims 1 to 3, comprising:
a first contact chamber (1) for putting the water to be treated with the ozone produced by said ozone generator (2);
a treatment chamber (3) constituting said ozone destroyer using ultraviolet rays and comprising at least one ultraviolet lamp acting on the water to be treated to both reduce the number of germs in said water and neutralize the ozone dissolved in said water;
at least one valve (6, 7) that can be controlled by said user to feed the ozone produced by said ozone generator (2) either in said first feeding point (8) in said first contact chamber, and/or in said second feeding point (9).

5. Device according to claim 4, at least one said valve (6, 7) being a electric valve controlled by said control device.

6. Device according to one of the claims 1 to 5, comprising an air pump (4) for feeding air under pressure in said ozone generator (2).

7. Device according to one of the claims 1 to 6, wherein said ozone generator comprises at least one ultraviolet lamp emitting in the wavelength range around 185nm, an air hose exposed to the ultraviolet rays emitted by said ultraviolet lamp in order to produce ozone, and a water hose exposed to the ultraviolet rays emitted by said ultraviolet lamp in order to reduce the level of bacteria in the water.

8. Device according to one of the claims 1 to 7, wherein said ozone generator comprises at least one ultraviolet lamp emitting in a wavelength range around 185nm, an air hose exposed to the ultraviolet rays emitted by said ultraviolet lamp in order to produce ozone, and a water hose exposed to the ultraviolet rays emitted by said ultraviolet lamp in order to reduce the level of bacteria in the water.

9. Water treatment method, comprising:
i) generating ozone (2);
ii) opening a first electric valve (7) controlled by a control device for feeding said ozone in the water to be treated at a first feeding point (8);
iii) destroying the ozone after treatment by means of an ozone destroyer (3) using ultraviolet rays,
iv) feeding the treated water into an outlet pipe (11) and then into a swimming pool or a Jacuzzi (22) downstream of said outlet pipe (11);
v) closing the fist electric valve (7) actuated by said control device so as to stop the feeding of ozone at said first feeding point (8);
vi) opening a second electric valve (6) controlled by said control device in order to feed the ozone generated by said ozone generator in said outlet pipe (11) without making it pass by said ozone destroyer (3), so as to temporarily increase the ozone content dissolved in said outlet pipe (11) and in the swimming pool or the Jacuzzi (22);
vii) closing the second electric valve (8) and opening the first electric valve (7), wherein the opening and closing are controlled either by a timer allowing an automatic return to a feeding of ozone at the first point after a predetermined duration; or by a button allowing in a single manipulation the closing of the second electric valve (8) and the opening of the first electric valve (7).
